# EUROPÄISCHE PATENTANMELDUNG

(11) **EP 4 729 308 A1**
(43) Veröffentlichungstag der Anmeldung: **22.04.2026**
(21) Anmeldenummer: 25202397.3
(22) Anmeldetag: 16.09.2025
(51) Int. Cl.: B60C 9/20, B60C 9/00, B60C 9/18

(54) **FAHRZEUGLUFTREIFEN**

(30) Priorität: 16.10.2024 DE 102024210006
(71) Anmelder: Continental Reifen Deutschland GmbH, 30175 Hannover (DE)
(72) Erfinder: Kotlarski, Maria, 30175 Hannover (DE); Plückers, Matthias, 30175 Hannover (DE)
(74) Vertreter: Continental Corporation

(57) **Zusammenfassung**

Die Erfindung betrifft einen Fahrzeugluftreifen (1), aufweisend einen Laufstreifen (2), eine Karkasse (3) und einen Gürtelverband (4) mit zumindest zwei aufeinanderliegenden Gürtellagen aus in eine Gürtelgummierung eingebetteten, parallel zueinander verlaufenden Festigkeitsträgern, wobei die Gürtellagen eine radial innere Arbeitslage (5) und eine radial äußere Arbeitslage (6) aufweisen, wobei der Gürtelverband (4) radial außerhalb der radial äußeren Arbeitslage (6) genau zwei aufeinanderliegende Schutzlagen (7, 8) mit in Bezug auf eine Umfangsmittellinie (9) gegenläufig verlaufenden Korden (10) aufweist, wobei die Korde (10) der einen Schutzlage (7, 8) mit einem Winkel zwischen 15° und 70° zur Umfangsmittellinie (9) angeordnet sind und die Korde (10) der jeweils anderen Schutzlage (8, 7) mit einem Winkel zwischen -15° und -70° zur Umfangsmittellinie (9) angeordnet sind, und wobei die Korde (10) einen mittleren Durchmesser von höchstens 1 mm aufweisen.

## Beschreibung

Die Erfindung betrifft einen Fahrzeugluftreifen mit einem Gürtelverband mit zumindest zwei aufeinanderliegenden Gürtellagen aus in eine Gürtelgummierung eingebetteten, parallel zueinander verlaufenden Festigkeitsträgern, wobei die Gürtellagen eine radial innere Arbeitslage und eine radial äußere Arbeitslage aufweisen.

Ein Fahrzeugluftreifen radialer Bauart weist im Allgemeinen eine luftundurchlässige Innenschicht, eine Festigkeitsträger enthaltende Radialkarkasse, die von einem Zenitbereich des Reifens über die Seitenwände bis in den Wulstbereich reicht und dort meist durch Umschlingen zugfester Wulstkerne verankert ist, einen radial außen befindlichen profilierten Laufstreifen und einen zwischen dem Laufstreifen und der Karkasse angeordneten Gürtel oder Gürtelverband auf.

In der Regel wird bei einer Konstruktion des Gürtelverbandes mit vier oder mehr Gürtellagen eine einzige Schutzlage als radial äußerste Gürtellage verwendet, wobei die anderen drei Gürtellagen Arbeitslagen bzw. Sperrlagen sind, die radial innerhalb der Schutzlage angeordnet sind. Mit nur einer Schutzlage wird nur eine begrenzte Schutzfunktion der Arbeitslagen erreicht. Außerdem ist eine Runderneuerung des Fahrzeugluftreifens nur bedingt und in begrenztem Umfang möglich.

Die Aufgabe der vorliegenden Erfindung besteht darin, einen Fahrzeugluftreifen mit verbessertem Schutz der Arbeitslagen sowie einer besseren Runderneuerungsfähigkeit bereitzustellen. Die Aufgabe wird gelöst durch den Gegenstand von Patentanspruch 1. Bevorzugte Ausführungsformen sind Gegenstand der abhängigen Ansprüche.

Ein erfindungsgemäßer Fahrzeugluftreifen umfasst einen Laufstreifen, eine Karkasse und einen Gürtelverband mit zumindest zwei aufeinanderliegenden Gürtellagen aus in eine Gürtelgummierung eingebetteten, parallel zueinander verlaufenden Festigkeitsträgern, die insbesondere als Stahlkorde ausgebildet sind, wobei die Gürtellagen eine radial innere Arbeitslage und eine radial äußere Arbeitslage aufweisen, wobei der Gürtelverband radial außerhalb der radial äußeren Arbeitslage genau zwei aufeinanderliegende Schutzlagen mit in Bezug auf eine Umfangsmittellinie gegenläufig verlaufenden Korden aufweist, wobei die Korde der einen Schutzlage mit einem Winkel zwischen 15° und 70° zur Umfangsmittellinie angeordnet sind und die Korde der jeweils anderen Schutzlage mit einem Winkel zwischen -15° und -70° zur Umfangsmittellinie angeordnet sind, und wobei die Korde einen mittleren Durchmesser von höchstens 1 mm aufweisen. Anders gesagt weisen die Schutzlagen einen Winkel von größer +/- 15° und von kleiner +/- 70° relativ zur Umfangsmittellinie auf, wobei die eine Schutzlage gegenläufig zur anderen Schutzlage verläuft. Der Winkel der beiden Schutzlagen kann, muss aber nicht, betragsmäßig gleich sein. Für die Erfindung ist eine Kombination aus exakt zwei Schutzlagen, deren Korde jeweils einen mittleren Durchmesser von höchstens 1 mm aufweisen und mit einem Winkel größer +/- 15° und kleiner +/- 70° relativ zur Umfangsmittellinie angeordnet sind, wesentlich.

Die Verwendung von zwei vergleichsweise dünnen Kordlagen als jeweilige Schutzlage anstelle einer einzigen, dickeren Schutzlage, wie aus dem Stand der Technik bekannt ist, verbessert die Schutzfunktion und die Runderneuerungsfähigkeit des Fahrzeugluftreifens. Da die beiden Schutzlagen sich kreuzen bzw. gegenläufig zueinander verlaufen, kann die Leistung bei den gesetzlich vorgeschriebenen Stößelprüfungen verbessert werden. Indem die Schutzlagen im Vergleich zu einer Ausführung mit nur einer einzigen, dickeren Schutzlage dünner ausgebildet sind, da deren Korde einen mittleren Durchmesser kleiner gleich 1 mm aufweisen, kann ein ähnliches Reifengewicht und Stahlvolumen wie bei bereits bekannten Konstruktionen mit nur einer einzigen Schutzlage erhalten werden. Korde, insbesondere Stahlkorde, mit einem mittleren Korddurchmesser kleiner gleich 1 mm sind zum Beispiel eine 2x0,30 mm oder 2+2x0,32 mm Kordkonstruktionen.

"Gegenläufig verlaufen" bedeutet, dass die Gürtellagen in Bezug auf die Umfangsmittellinie entgegengesetzt zueinander orientiert sind, also die Umfangsmittellinie in entgegengesetzte Richtungen kreuzen. "Gleichläufig verlaufen" bedeutet demgegenüber, dass die Gürtellagen in derselben Ausrichtung verlaufen, also mit derselben Orientierung zur Umfangsmittellinie angeordnet sind.

Der "mittlere Durchmesser" eines Kords mit verdrehten Filamenten bezieht sich auf den Durchschnittsdurchmesser des gesamten Kords, wenn man die einzelnen verdrehten Filamente sowie eine Gummiummantelung berücksichtigt. Hierbei handelt es sich um den Durchmesser, der nicht nur den äußeren Umfang des Kords beschreibt, sondern vielmehr den Durchschnittswert des Durchmessers über die gesamte Länge des Kords darstellt, unter Berücksichtigung der Verdrehung und des Zusammenhalts der einzelnen Filamente.

Die Karkasse ist vorzugsweise als Radialkarkasse ausgebildet. Der Fahrzeugluftreifen ist dementsprechend ein Radialreifen. Bei Radialreifen verläuft die Karkassenlage, also die Festigkeitsträger der Karkasslage, nahezu senkrecht zur Lauffläche, wobei ihre Orientierung im Winkelbereich zwischen 75° und kleiner als 90° zur Umfangsmittellinie liegt. Der radiale Aufbau der Karkassenlage sorgt dafür, dass der Fahrzeugluftreifen flexibler in der Seitenwand ist, was zu einer besseren Bodenanpassung, höherem Fahrkomfort und einer gleichmäßigeren Druckverteilung auf der Aufstandsfläche führt. Denkbar ist, dass die Karkasse mehrere Lagen aufweist. In diesem Fall können die Lagen der Radialkarkasse so angeordnet sein, dass sie sich in entgegengesetzten Orientierungen überlagern bzw. überschneiden, wodurch eine stabile und widerstandsfähige Struktur entsteht.

Denkbar ist, die Karkasse als Diagonalkarkasse auszubilden, so dass der Fahrzeugluftreifen entsprechend ein Diagonalreifen ist. Bei diesen Reifen verlaufen die Gürtellagen in einem schrägen Winkel, meist zwischen 30° und 45°, zur Umfangsmittellinie und überkreuzen sich in den verschiedenen Schichten, weisen insbesondere eine alternierende Orientierung auf. Diagonalreifen sind robuster und widerstandsfähiger gegenüber Beschädigungen durch scharfe Gegenstände, jedoch bieten sie weniger Komfort und eine geringere Anpassung an den Boden im Vergleich zu Radialreifen.

Der Gürtelverband dient als Verstärkungsgürtel und weist eine solche Festigkeit auf, damit eine ausreichende Scheitelfestigkeit im Bereich der Umfangsmittellinie gewährleistet ist. Als "Gürtellage" des Gürtelverbandes ist eine gummiverstärkte Schicht bzw. gummierte Verstärkungsschicht zu verstehen, in der eine Vielzahl von voneinander beabstandeten, parallel angeordneten Festigkeitsträgern bzw. Korden eingebettet sind. Ein Festigkeitsträger oder "Kord" ist ein Faden oder -draht, der in die Gummimischung der jeweiligen Gürtellage bzw. Gürtellagenschicht eingebettet ist. Die Korde geben dem Fahrzeugluftreifen Struktur und Stabilität.

Die Umfangsmittellinie liegt auf einer Äquatorialebene des Fahrzeugluftreifens, wobei die Festigkeitsträger der Arbeitslagen sowie die Korde der Schutzlagen in Bezug auf die Äquatorialebene geneigt angeordnet sind. Die "Äquatorialebene" bzw.

"Umfangsmittellinie" bezeichnet die Ebene, die senkrecht zur Drehachse des Reifens steht und durch die Mitte des Laufstreifens verläuft. "Laufstreifen" bezeichnet eine in einer Form hergestellte Kautschukkomponente, die, wenn sie mit einem Reifenmantel verbunden ist, denjenigen Abschnitt des Reifens umfasst, der in Kontakt mit der Straße gelangt, wenn der Reifen normal aufgepumpt und normal belastet ist.

Vorzugsweise sind die Korde der einen Schutzlage mit einem Winkel zwischen 40° und 60°, bevorzugt mit einem Winkel zwischen 43° und 47°, zur Umfangsmittellinie angeordnet und die Korde der jeweils anderen Schutzlage sind mit einem Winkel zwischen -40° und -60°, bevorzugt mit einem Winkel zwischen -43° und -47°, zur Umfangsmittellinie angeordnet. Anders gesagt weisen die Schutzlagen einen Winkel von größer +/- 40°, bevorzugt von größer +/- 43° und von kleiner +/- 60°, bevorzugt von kleiner +/- 47° relativ zur Umfangsmittellinie auf, wobei die eine Schutzlage gegenläufig zur anderen Schutzlage verläuft. Der jeweilige Winkel der beiden Schutzlagen kann, muss aber nicht, betragsmäßig gleich sein.

Bevorzugt verlaufen die Korde der einen Schutzlage und die Korde der jeweils anderen Schutzlage senkrecht zueinander. Der Winkel zwischen den Korden der einen Schutzlage beträgt folglich im Wesentlichen 90° zu den Korden der anderen Schutzlage.

Ferner bevorzugt sind Festigkeitsträger der einen Arbeitslage mit einem Winkel zwischen 15° und 25° zur Umfangsmittellinie angeordnet und Festigkeitsträger der jeweils anderen Arbeitslage sind mit einem Winkel zwischen -15° und -25° zur Umfangsmittellinie angeordnet. Mit anderen Worten weisen die radial innere Arbeitslage sowie die radial äußere Arbeitslage einen Winkel von größer +/- 15° und von kleiner +/- 25° relativ zur Umfangsmittellinie auf, wobei die radial innere Arbeitslage gegenläufig zur radial äußeren Arbeitslage verläuft. Der jeweilige Winkel der beiden Arbeitslagen kann, muss aber nicht, betragsmäßig gleich sein.

Nach einem Ausführungsbeispiel der Gürtelverband genau fünf Gürtellagen, nämlich von radial außen nach radial innen betrachtet die radial äußere Schutzlage, die radial innere Schutzlage, die radial äußere Arbeitslage, die radial innere Arbeitslage sowie eine Sperrlage, aufweist. Die Sperrlage ist eine optionale Gürtellage des Gürtelverbands. Die Sperrlage ist radial zwischen der radial inneren Arbeitslage und der Karkasse angeordnet. Vorzugsweise sind Festigkeitsträger der Sperrlage mit einem Winkel zwischen 40° und 70° oder zwischen -40° und -70° zur Umfangsmittellinie angeordnet sind. Bevorzugt sind Festigkeitsträger der Sperrlage mit einem Winkel zwischen 40° und 65° oder zwischen -40° und -65° zur Umfangsmittellinie angeordnet. Ferner bevorzugt sind Festigkeitsträger der Sperrlage mit einem Winkel zwischen 40° und 60° oder zwischen -40° und -60° zur Umfangsmittellinie angeordnet.

Einzelne in radialer Richtung benachbarte Gürtellagen können aneinander anliegen, also unmittelbar miteinander in Kontakt stehen, oder zueinander beabstandet sein.

Bevorzugt sind die Schutzlagen in Umfangsrichtung betrachtet schmaler ausgebildet als die Arbeitslagen. Anders gesagt sind die Schutzlagen in axialer Richtung des Fahrzeugluftreifens kürzer ausgebildet. Die Arbeitslagen erstrecken sich also über die lateralen Randbereiche der Schutzlagen hinaus.

Nach einem Ausführungsbeispiel weist der jeweilige Kord der Schutzlage mindestens zwei in Gummi eingebettete, verdrehte Filamente auf. Demnach sind mindestens zwei Filamente zu einem Kord der jeweiligen Schutzlage verdreht. Der Begriff "Filament" meint einen einzelnen Draht des jeweiligen Kords. Der Begriff "Kord" meint demnach mindestens zwei miteinander verdrehte Filamente, die in Gummi eingebettet sind. Eine der Schutzlagen oder beide Schutzlagen weisen derartig ausgebildete Korde auf.

Nach einem weiteren Ausführungsbeispiel weist der jeweilige Kord der Schutzlage vier in Gummi eingebettete, verdrehte Filamente auf. Demnach sind mindestens vier Filamente zu einem Kord der jeweiligen Schutzlage verdreht. Der Kord ist insbesondere als 2x2-Konstruktion ausgeführt. Eine der Schutzlagen oder beide Schutzlagen weisen derartig ausgebildete Korde auf.

Vorzugsweise weisen sämtliche Filamente einen Durchmesser zwischen 0,1 mm und 0,45 mm, vorzugsweise zwischen 0,2 mm und 0,35 mm, auf. Dabei beträgt der mittlere Durchmesser des Kords unabhängig der Anzahl der Filamente je Kord höchstens 1 mm. In einem Ausführungsbeispiel mit zwei Filamenten je Kord besteht eine der Schutzlagen oder beide Schutzlagen jeweils aus in eine Kautschuk- bzw. Gummimischung eingebetteten, untereinander parallel zueinander verlaufenden Korden der Konstruktion 2x0,30 mm. Das jeweilige Filament weist demnach einen Durchmesser von 0,30 mm auf. Der mittlere Durchmesser des Kords beträgt folglich zwischen 0,60 mm und 1 mm. In einem weiteren Ausführungsbeispiel mit vier Filamenten je Kord besteht eine der Schutzlagen oder beide Schutzlagen jeweils aus in eine Kautschukmischung eingebetteten, untereinander parallel zueinander verlaufenden Korden der Konstruktion 2+2x0,32 mm, wobei das jeweilige Filament einen Durchmesser von 0,32 mm aufweist. Der mittlere Durchmesser des Kords beträgt dabei zwischen 0,64 mm und 1 mm.

Weitere Merkmale, Vorteile und Einzelheiten der Erfindung werden nun anhand der Zeichnungen, die zwei bevorzugte Ausführungsbeispiele der Erfindung zeigen, näher beschrieben, wobei gleiche oder ähnliche Bauteile mit demselben Bezugszeichen versehen sind. Dabei zeigen
- Fig. 1: eine stark schematische Querschnittdarstellung eines - nur teilweise dargestellten - erfindungsgemäßen Fahrzeugluftreifens gemäß einer ersten Ausführungsform der Erfindung,
- Fig. 2: eine schematische Querschnittdarstellung eines Kords einer Schutzlage des erfindungsgemäßen Fahrzeugluftreifens nach Fig. 1, und
- Fig. 3: eine schematische Querschnittdarstellung eines Kords einer Schutzlage des erfindungsgemäßen Fahrzeugluftreifens gemäß einer Ausführungsalternative.

Gemäß der Erfindung ausgeführte Fahrzeugluftreifen 1 können als PKW-, Van-, Light Truck-, und LKW-Luftreifen ausgebildet sein. Der Fahrzeugluftreifen 1 kann besonders vorteilhaft für Nutzfahrzeuge verwendet werden, insbesondere für Anwendungen mit einem Off-Road-Anteil wie bei On/Off- oder Off-Road-Reifen. Demnach ist der Fahrzeugluftreifen 1 insbesondere ein Nutzfahrzeugreifen, gemäß dem englischen Ausdruck "Commercial Vehicle Tires" auch als CVT-Reifen bezeichnet.

Der Fahrzeugluftreifen 1 umfasst einen Laufstreifen 2, der zwischen zwei Seitenwänden 18 angeordnet ist, wovon hier lediglich eine Seitenwand 18 angedeutet ist. Der Fahrzeugluftreifen 1 umfasst ferner eine Karkasse 3 sowie einen Gürtelverband 4 mit vorliegend fünf aufeinanderliegenden und/oder in radialer Richtung beabstandet zueinander angeordneten Gürtellagen aus in eine Gürtelgummierung eingebetteten, parallel zueinander verlaufenden Festigkeitsträgern sowie Korden 10.

Die Gürtellagen weisen von radial außen nach radial innen betrachtet eine radial äußere Schutzlage 8, eine radial innere Schutzlage 7, eine radial äußere Arbeitslage 6, eine radial innere Arbeitslage 5 sowie eine Sperrlage 12 auf. Die Sperrlage 12 ist radial zwischen der radial inneren Arbeitslage 5 und der Karkasse 3 angeordnet. Die Schutzlagen 7, 8 sind in Umfangsrichtung betrachtet schmaler ausgebildet als die Arbeitslagen 5, 6. Die Arbeitslagen 5, 6 sind bis in einen jeweiligen Randbereich 20 des Laufstreifens 2 geführt. Die radial äußere Arbeitslage 6 ist zudem im Randbereich 20 nach radial außen abgeknickt, so dass im Randbereich 20 der radiale Abstand zwischen den Arbeitslagen 5, 6 in axialer Richtung des Fahrzeugluftreifens 1 zunimmt.

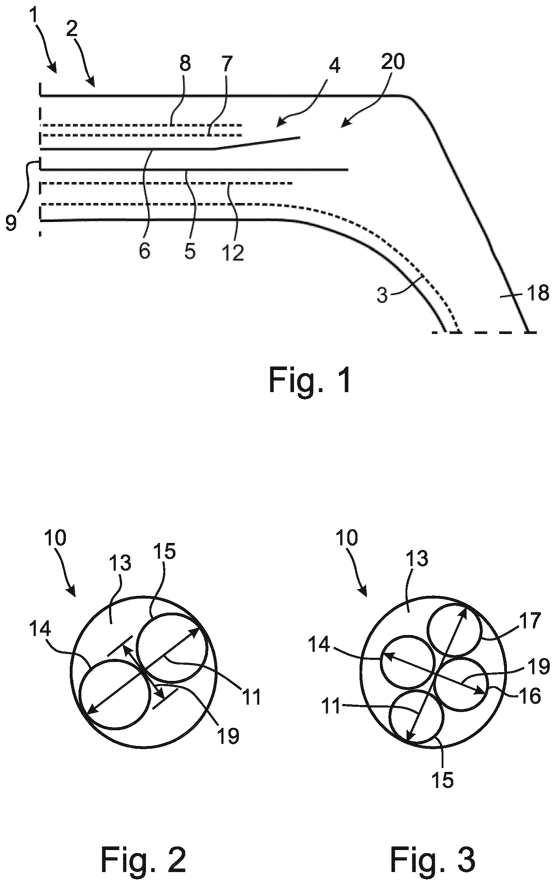

Die Schutzlagen 7, 8 bestehen aus in eine Gürtelgummierung eingebetteten, parallel zueinander verlaufenden Korden 10, wovon ein Kord 10 in Figur 2 bzw. Figur 3 dargestellt ist. Die Korde 10 der Schutzlagen 7, 8 verlaufen in Bezug auf eine Umfangsmittellinie 9 gegenläufig. Sie sind also in entgegengesetzte Richtungen ausgerichtet. Vorliegend sind die Korde 10 der ersten Schutzlage 7 mit einem Winkel von +45° zur Umfangsmittellinie 9 angeordnet und die Korde 10 der zweiten Schutzlage 8 sind senkrecht dazu, also mit einem Winkel von -45° zur Umfangsmittellinie 9 angeordnet, oder umgekehrt. Selbstverständlich müssen die Ausrichtungswinkel der beiden Schutzlagen 7, 8 nicht zwingend betragsmäßig gleich sein.

Aus Figur 2, der Querschnittsdarstellung eines der Korde 10 der ersten oder zweiten Schutzlage 7, 8, geht hervor, dass der jeweilige Kord 10 einen mittleren Durchmesser kleiner gleich 1 mm aufweist. Der jeweilige Kord 10 besteht aus vorliegend zwei in Gummi 13 eingebetteten Filamenten 14, 15, die miteinander zu einem Strang bzw. zum Kord 10 verdreht sind. Der mittlere Durchmesser des Kords 10 bezieht sich auf den Durchschnittsdurchmesser des gesamten Kords 10 über die Länge. Der mittlere Durchmesser des Kords 10 ergibt sich zumindest aus einem ersten Durchmesser 11 sowie einem zweiten Durchmesser 19 der hier beispielhaft gezeigten 2x0,30 mm-Kordkonstruktion. Die Filamente 14, 15 weisen demnach einen Durchmesser von etwa 0,3 mm auf.

Durch das Vorsehen von zwei dünneren Schutzlagen 7, 8 im Gegensatz zu einer einzigen dickeren Schutzlage, wie sie aus dem Stand der Technik bekannt ist, kann der Fahrzeugluftreifen 1 im Wesentlichen gewichtsneutral ausgestaltet werden und es ist ein ähnlicher Materialaufwand erforderlich.

Die als Stahlkorde ausgebildeten Festigkeitsträger der radial inneren Arbeitslage 5 sind mit einem Winkel zwischen +15° und +25° zur Umfangsmittellinie 9 angeordnet und Festigkeitsträger der radial äußeren Arbeitslage 6 sind mit einem Winkel zwischen -15° und -25° zur Umfangsmittellinie 9 angeordnet, oder umgekehrt. Die radial innere Arbeitslage verläuft gegenläufig zur radial äußeren Arbeitslage. Der Winkel der beiden Arbeitslagen 5, 6 kann, muss aber nicht, betragsmäßig gleich sein.

Die als Stahlkorde ausgebildeten Festigkeitsträger der Sperrlage 12 sind mit einem Winkel zwischen + 40° und + 70° oder zwischen - 40° und - 70° zur Umfangsmittellinie 9 angeordnet bzw. orientiert. Die Festigkeitsträger der Sperrlage 12 können gegenläufig zu den Festigkeitsträgern der radial inneren Arbeitslage 5 verlaufen. Alternativ können die Festigkeitsträger der Sperrlage 12 und die Festigkeitsträger der radial inneren Arbeitslage 5 in Bezug auf die Umfangsmittellinie 9 gleich orientiert sein.

Figur 3 zeigt eine alternative Ausgestaltung eines exemplarischen Kords 10 der Schutzlagen 7, 8. Der Kord 10 weist ebenfalls einen mittleren Durchmesser kleiner gleich 1 mm auf. Der Kord 10 besteht aus vorliegend vier in Gummi 13 eingebetteten Filamenten 14, 15, 16, 17 die miteinander zu einem Strang bzw. zum Kord 10 verdreht sind. Der mittlere Durchmesser des Kords 10 ergibt sich auch hier zumindest aus einem ersten Durchmesser 11 sowie einem zweiten Durchmesser 19 der hier beispielhaft gezeigten 2+2x0,32 mm-Kordkonstruktion. Die Filamente 14, 15, 16, 17 weisen jeweils einen Durchmesser von etwa 0,32 mm auf.

### Bezugszeichenliste

- 1: Fahrzeugluftreifen
- 2: Laufstreifen
- 3: Karkasse
- 4: Gürtelverband
- 5: Arbeitslage
- 6: Arbeitslage
- 7: Schutzlage
- 8: Schutzlage
- 9: Umfangsmittellinie
- 10: Kord der Schutzlage
- 11: Erster Durchmesser
- 12: Sperrlage
- 13: Gummi
- 14: Filament des Kords
- 15: Filament des Kords
- 16: Filament des Kords
- 17: Filament des Kords
- 18: Seitenwand
- 19: Zweiter Durchmesser
- 20: Randbereich

## Patentansprüche

1. Fahrzeugluftreifen (1), aufweisend einen Laufstreifen (2), eine Karkasse (3) und einen Gürtelverband (4) mit zumindest zwei aufeinanderliegenden Gürtellagen aus in eine Gürtelgummierung eingebetteten, parallel zueinander verlaufenden Festigkeitsträgern, wobei die Gürtellagen eine radial innere Arbeitslage (5) und eine radial äußere Arbeitslage (6) aufweisen, wobei der Gürtelverband (4) radial außerhalb der radial äußeren Arbeitslage (6) genau zwei aufeinanderliegende Schutzlagen (7, 8) mit in Bezug auf eine Umfangsmittellinie (9) gegenläufig verlaufenden Korden (10) aufweist, wobei die Korde (10) der einen Schutzlage (7, 8) mit einem Winkel zwischen 15° und 70° zur Umfangsmittellinie (9) angeordnet sind und die Korde (10) der jeweils anderen Schutzlage (8, 7) mit einem Winkel zwischen -15° und -70° zur Umfangsmittellinie (9) angeordnet sind, und wobei die Korde (10) einen mittleren Durchmesser von höchstens 1 mm aufweisen.

2. Fahrzeugluftreifen (1) nach Anspruch 1, **dadurch gekennzeichnet, dass** die Korde (10) der einen Schutzlage (7, 8) mit einem Winkel zwischen 40° und 60°, vorzugsweise mit einem Winkel zwischen 43° und 47°, zur Umfangsmittellinie (9) angeordnet sind und die Korde (10) der jeweils anderen Schutzlage (8, 7) mit einem Winkel zwischen -40° und -60°, vorzugsweise mit einem Winkel zwischen -43° und - 47°, zur Umfangsmittellinie (9) angeordnet sind.

3. Fahrzeugluftreifen (1) nach Anspruch 1 oder Anspruch 2, **dadurch gekennzeichnet, dass** Festigkeitsträger der einen Arbeitslage (5, 6) mit einem Winkel zwischen 15° und 25° zur Umfangsmittellinie (9) angeordnet sind und Festigkeitsträger der jeweils anderen Arbeitslage (6, 5) mit einem Winkel zwischen - 15° und -25° zur Umfangsmittellinie (9) angeordnet sind.

4. Fahrzeugluftreifen (1) nach einem der vorhergehenden Ansprüche, **dadurch gekennzeichnet, dass** die Korde (10) der einen Schutzlage (7, 8) und die Korde (10) der jeweils anderen Schutzlage (8, 7) senkrecht zueinander verlaufen.

5. Fahrzeugluftreifen (1) nach einem der vorhergehenden Ansprüche, **dadurch gekennzeichnet, dass** der Gürtelverband (4) genau fünf Gürtellagen, nämlich von radial außen nach radial innen betrachtet die radial äußere Schutzlage (8), die radial innere Schutzlage (7), die radial äußere Arbeitslage (6), die radial innere Arbeitslage (5) sowie eine Sperrlage (12), aufweist.

6. Fahrzeugluftreifen (1) nach Anspruch 5, **dadurch gekennzeichnet, dass** Festigkeitsträger der Sperrlage (12) mit einem Winkel zwischen 40° und 70° oder zwischen -40° und -70° zur Umfangsmittellinie (9) angeordnet sind.

7. Fahrzeugluftreifen (1) nach einem der vorhergehenden Ansprüche, **dadurch gekennzeichnet, dass** die Schutzlagen (7, 8) in Umfangsrichtung betrachtet schmaler ausgebildet sind als die Arbeitslagen (5, 6).

8. Fahrzeugluftreifen (1) nach einem der vorhergehenden Ansprüche, **dadurch gekennzeichnet, dass** der jeweilige Kord (10) der Schutzlage (7, 8) mindestens zwei in Gummi (13) eingebettete, verdrehte Filamente (14, 15) aufweist.

9. Fahrzeugluftreifen (1) nach Anspruch 8, **dadurch gekennzeichnet, dass** der jeweilige Kord (10) der Schutzlage (7, 8) vier in Gummi (13) eingebettete, verdrehte Filamente (14, 15, 16, 17) aufweist.

10. Fahrzeugluftreifen (1) nach Anspruch 8 oder Anspruch 9, **dadurch gekennzeichnet, dass** sämtliche Filamente (14, 15, 16, 17) einen Durchmesser zwischen 0,1 mm und 0,45 mm, vorzugsweise zwischen 0,2 mm und 0,35 mm, aufweisen.
